# EUROPEAN PATENT APPLICATION

(11) **EP 4 729 908 A1**
(43) Date of publication of application: **22.04.2026**
(21) Application number: 25209049.3
(22) Date of filing: 16.10.2025
(51) Int. Cl.: G01L 5/00, G01M 7/08, G01M 17/10

(54) **TESTING DEVICE FOR A RAILWAY BOGIE**

(30) Priority: 16.10.2024 IT 202400004200 U
(71) Applicant: Officine Meccaniche B.B.M. S.p.A., 36028 Rossano Veneto (VI) (IT)
(72) Inventor: BIN, Carlo, 36028 Rossano Veneto VI (IT)
(74) Representative: Giopato, Paolo

(57) **Abstract**

The present disclosure relates to a testing device (100) for a railway bogie comprising a support structure adapted to support a beam (10), which is configured to be arranged transversely with respect to the rails of the railway bogie to be tested, wherein the testing device (100) further comprises:
- at least one plate (20) associated with said beam (10),
- at least one load application device (30) associated with the at least one plate (20).
In particular, the at least one load application device (30) comprises at least one planetary roller screw (31), having a first load application end (31a) facing in use towards the railway bogie, and actuation means configured to actuate the at least one planetary roller screw (31) and enable application of a test load on the railway bogie.

## Description

This disclosure relates generally to the field of railway bogies. This disclosure specifically relates to a device for testing a railway bogie by applying a load.

Railway bogies are subjected to compression tests, also known as "Bogie tests", using a press to test them following production or during maintenance operations. The press reproduces the load acting on the railway bogie during use, simulating operating conditions and verifying compliance with design specifications.

Typically, the presses used for testing railway bogies include one or more hydraulic cylinders, which allow for fairly accurate test results.

However, conventional testing devices for railway bogies have numerous disadvantages.

First, the use of hydraulic cylinders requires the use of a hydraulic power unit, which requires large amounts of oil that is difficult to dispose of. Furthermore, the hydraulic system requires frequent replacement of the oil filtering elements. Finally, devices using hydraulic cylinders have poor system efficiency and high maintenance costs.

Some well-known testing devices use one or more trapeze screw mechanical jacks with or ball screw mechanical jacks instead of hydraulic cylinders, but these still present some disadvantages.

In particular, these devices are very bulky due to the mechanical components of the jack; specifically, for the same maximum applicable load, the bulk of ball screws is particularly large.

Furthermore, these devices have limited efficiency due to the jack's gears, especially in the case of trapeze screws.

Additionally, all known systems have the significant disadvantage that measuring the stroke of hydraulic cylinders or jacks is not always accurate, due to the use of external measuring devices that are unable to accurately measure the cylinder stroke consistently.

A technical problem underlying this disclosure lies in providing a testing device for a railway bogie capable of overcoming the drawbacks of the prior art and/or achieving additional advantages.

This problem is solved by a testing device for a railway bogie according to the independent claim.

Secondary features of the subject matter of this disclosure are defined in the dependent claims.

A testing device for a railway bogie according to this disclosure comprises a support structure capable of supporting a beam, configured to be arranged transversely with respect to the rails of the railway bogie to be tested. The testing device further comprises at least one plate, associated with the beam and preferably configured to slide along the beam, and at least one load application device associated with the at least one plate.

Furthermore, the at least one load application device comprises at least one planetary roller screw, having a first load-application end facing the bogie in use, and actuating means configured to drive the at least one planetary roller screw and enable the application of a test load to the bogie.

The at least one planetary roller screw allows for higher loads to be generated than ball screws according to the prior art, thanks to the larger contact surface between the nut and the rollers, which distributes the load over a larger area, while also extending the device's service life due to reduced component wear.

At the same time, for example, it is possible to increase the efficiency of transforming the rotary motion of the drive means into the linear motion of the planetary roller screw that generates the test load of the railway bogie.

Furthermore, the at least one planetary roller screw allows for greater positioning accuracy and improved dynamic response, ensuring greater test reliability compared to the prior art.

Furthermore, planetary roller screws allow for a smaller encumbrance and greater resistance to external contaminants such as dust and debris compared to prior art devices.

The testing device according to this disclosure allows for reduced maintenance costs and frequency compared to prior art devices, as the replacement and disposal of hydraulic oil, related filters, and hoses are not required.

Furthermore, the testing device according to this disclosure eliminates dust generation caused by the hydraulic power unit motor and its cooling system.

Preferably, the actuating means comprise an electric motor, such as an electric gearmotor. This reduces the noise pollution of the device, as the electric motor is much quieter than conventional devices. Furthermore, the system's energy efficiency is significantly improved compared to the prior art, as energy waste due to internal dissipation of hydraulic valves and alternative cooling systems is eliminated.

Furthermore, the electric motor can only be operated while the device is in use, unlike known devices.

Even more preferably, the electric motor includes a resolver and/or encoder configured to measure the travel of the at least one planetary roller screw.

This eliminates the need to install resolvers and/or encoders external to the device, thus reducing the cost of purchasing and installing external linear transducers.

It is therefore clear that the testing device according to this disclosure offers numerous advantages over the prior art.

Other advantages, features, and methods of use of the subject matter of this disclosure will become apparent from the following detailed description of some preferred embodiments, given for illustrative and non-limiting purposes.

It is clear, however, that each embodiment may offer one or more of the advantages listed above; however, it is not required that each embodiment simultaneously offer all of the advantages listed.

Reference will be made to the figures in the attached drawings, in which:
- Figure 1 shows a perspective view of a portion of a railway bogie testing device according to one embodiment of the present invention, in which the support structure is not shown;

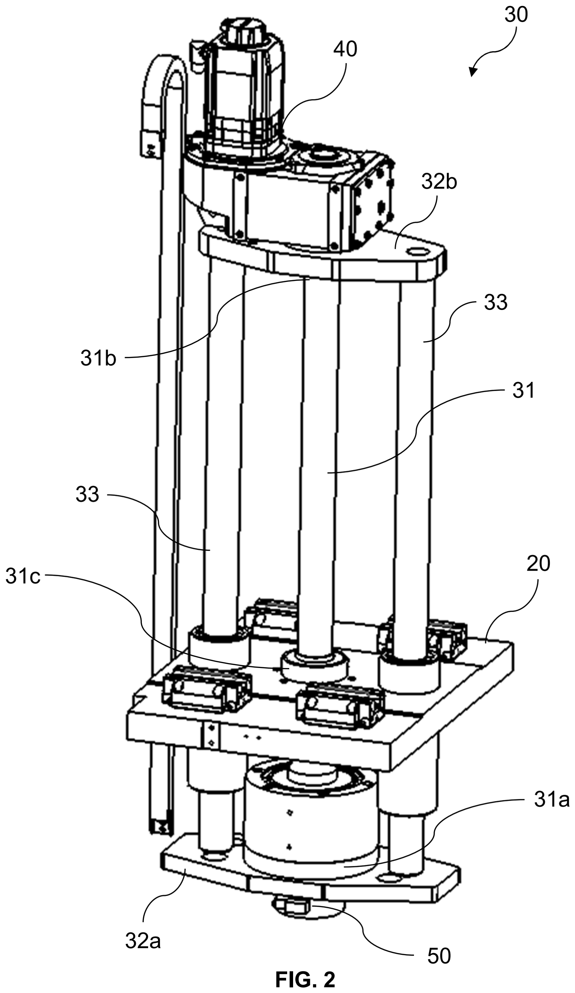

- Figure 2 shows a perspective view of a load application device according to one embodiment of the present invention.

With reference to the attached figures, the reference number 100 overall indicates a test device for a railway bogie comprising a support structure designed to support a beam 10. It should be noted that the support structure is not illustrated in the attached figures as this support structure is known to an expert in the field.

The support structure may include, for example, a pedestal, designed to support tracks on which the railway bogie to be tested can be positioned, and may also include, for example, a pair of support columns positioned on the pedestal and designed to support the beam 10.

The beam 10 is configured to be arranged transversely with respect to the tracks of the bogie to be tested, that is with respect to the tracks on which the bogie to be tested is positioned, and testing device 100 further comprises:
- at least one plate 20 associated with beam 10,
- at least one load application device 30 associated with the at least one plate 20.

Furthermore, the at least one load application device 30 comprises at least one planetary roller screw 31, having a first load application end 31a facing in use toward the bogie, and further comprises actuation means configured to actuate the at least one planetary roller screw 31 and allow application of a test load to the bogie.

For example, the plate 20 may be fixed to the beam 10 in a fixed position, or the plate 20 may be movable on the beam 10.

In one embodiment, the plate 20 is configured to slide along the beam 10. That is, the plate 20 is preferably a movable plate that can be moved along the beam 10, for example, to position the load application device 30 in an operating position for testing.

Preferably, the drive means comprise an electric motor 40.

Even more preferably, the electric motor 40 comprises a resolver and/or an encoder configured to perform a measurement of the stroke of the at least one planetary roller screw 31 during the application of the test load.

Preferably, the at least one planetary roller screw 31 comprises a nut 31c associated with the plate 20 and in such a way that the at least one planetary roller screw 31 is arranged so that it passes through the plate 20.

Preferably, the load application device 30 further comprises a first base plate 32a and a second base plate 32b, where in particular the first base plate 32a is associated with the at least one planetary roller screw 31 at the first end 31a and the second base plate 32b is associated with the at least one planetary roller screw 31 at a second end 31b of the at least one planetary roller screw 31, opposite the first end 31a.

Preferably, furthermore, the load application device 30 further comprises at least one support rod 33 arranged so as to pass through the plate 20, and preferably associated with the plate 20, and associated with the first base plate 32a and the second base plate 32b, at opposite ends. Even more preferably, the load application device 30 comprises a pair of support rods 33.

In other words, preferably the at least one planetary roller screw 31 and the at least one support rod 33 are associated with the plate 20 so as to be arranged passing through the plate 20. Furthermore, preferably the at least one planetary roller screw 31 and the at least one support rod 33 extend between a first base plate 32a and a second base plate 32b, positioned on opposite sides of the plane defined by the plate 20.

Preferably, the testing device 100 comprises a plurality of bearings arranged between the first end 31a of the at least one planetary roller screw 31 and the first base plate 32a; further preferably, the plurality of bearings is configured to transmit the test load of the at least one planetary roller screw 31 to the first base plate 32a to enable application of a test load on the bogie. That is, the planetary roller screw 31 may transfer a load to the plurality of bearings, which may in turn transmit the load to the first base plate 32a to apply the test load on the bogie.

Preferably, the testing device 100 comprises a load cell 50 associated with a lower surface of the first base plate 32a, i.e., a surface facing the bogie under test, so as to be able to measure the test load applied to the bogie. That is, the test load is preferably transferred from the planetary roller screw 31 to the load cell 50, for example, through the plurality of bearings and the first base plate 32a. Therefore, the test load is preferably applied to the bogie by the load cell 50.

Preferably, the drive means, such as the electric motor 40, are positioned on the second base plate 32b of the load application device 30.

Preferably, furthermore, the load application device 30 comprises a pair of support rods 33 arranged symmetrically with respect to each other around the longitudinal axis of the at least one planetary roller screw 31. For example, the at least one planetary roller screw 31 extends between a central region of the first base plate 32a and a central region of the second base plate 32b, and the support rods 33 are arranged on the sides of the at least one planetary roller screw 31 in a symmetrical manner with respect to the latter.

Therefore, by means of the testing device according to the present disclosure, preferably when the plate 20 is moved along the beam 10 to reach an operating position, i.e. a position in which the load applying device 30 can apply the test load on the rail carriage, the load applying device 30 applies the test load on the rail carriage and, preferably, the resolver and/or the encoder of the electric motor 40 can accurately measure the stroke of the at least one planetary roller screw 31.

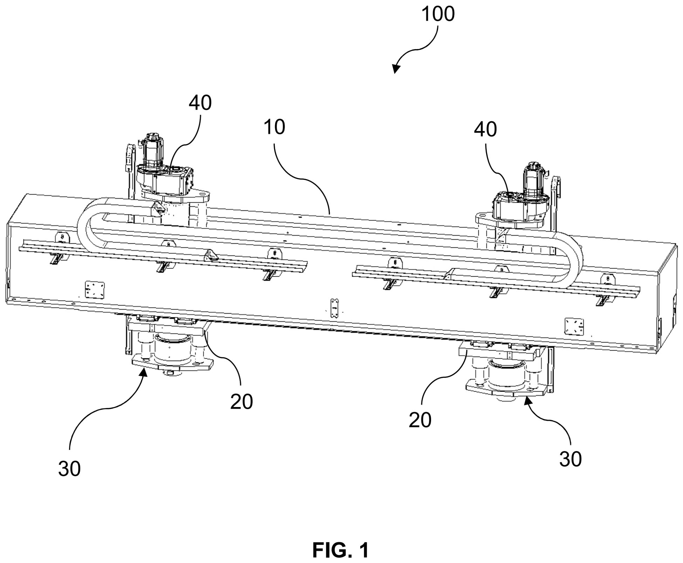

According to a preferred embodiment illustrated, for example, in Figure 1, the testing device 100 comprises a beam 10, two plates 20, and two load-application devices 30, each associated with a respective plate 20 of the two plates 20. Specifically, each load-application device 30 comprises a planetary roller screw 31 and drive means, such as an electric motor 40, configured to drive the respective planetary roller screw 31.

The subject matter of this disclosure has been described so far with reference to its embodiments. It is understood that other embodiments may exist, all of which fall within the scope of the claims set forth below.

## Claims

1. Testing device (100) for a railway bogie comprising a support structure adapted to support a beam (10), which is configured to be arranged transversely with respect to the rails of the railway bogie to be tested, wherein the testing device (100) further comprises:
- at least one plate (20) associated with said beam (10),
- at least one load application device (30) associated with said at least one plate (20) wherein said at least one load application device (30) comprises at least one planetary roller screw (31), having a first load application end (31a) facing in use towards said railway bogie, and actuating means configured to actuate said at least one planetary roller screw (31) and to enable application of a test load on said railway bogie.

2. Testing device (100) according to the preceding claim, wherein said plate (20) is configured to be able to slide along said beam (10).

3. Testing device (100) according to any of the preceding claims, wherein said actuating means comprise an electric motor (40).

4. Testing device (100) according to the preceding claim, wherein said electric motor (32) comprises a resolver and/or an encoder configured to perform a measurement of the stroke of said at least one satellite roller screw (31).

5. Testing device (100) according to any of the preceding claims, wherein said at least one planetary roller screw (31) comprises a nut screw (31c) associated with said plate (20) in such a manner that said at least one planetary roller screw (31) is arranged passing through said plate (20).

6. Testing device (100) according to the preceding claim, wherein said load application device (30) further comprises a first base plate (32a) and a second base plate (32b), wherein said first base plate (32a) is associated with said at least one planetary roller screw (31) at said first end (31a) and said second base plate (32b) is associated with said at least one planetary roller screw (31) at a second end (31b) of said at least one planetary roller screw (31), opposite to said first end (31a), and wherein said load application device (30) further comprises at least one support rod (33) arranged passing through said plate (20) and associated with said first base plate (32a) and said second base plate (32b).

7. Testing device (100) according to the preceding claim, comprising a plurality of bearings arranged between said first end (31a) of said at least one planetary roller screw (31) and said first base plate (32a), wherein said plurality of bearings is configured to transmit the test load from said at least one planetary roller screw (31) to said first base plate (32a) to enable an application of a test load on the railway bogie.

8. Testing device (100) according to claim 6 or 7, comprising a load cell (50) associated with a lower surface of said first base plate (32a) facing in use towards the railway bogie to be tested.

9. Testing device (100) according to any of claims 6 to 8, wherein said actuating means are positioned on said second base plate (32b) of the load application device (30).

10. Testing device (100) according to any of claims 6 to 9, wherein said load applying device (30) comprises a pair of support rods (33) arranged symmetrically with respect to each other about the longitudinal axis of said at least one satellite roller screw (31).

11. Testing device (100) according to any of the preceding claims, comprising a beam (10), two plates (20) and two load application devices (30), each associated with a respective plate (20) of said two plates (20), wherein each load application device (30) comprises a satellite roller screw (31) and driving means configured to drive the respective satellite roller screw (31).
